## Europäisches Patentamt
## European Patent Office
## Office européen des brevets

(19)

(11) Numéro de publication: **0 184 689**
**B1**

(12) # FASCICULE DE BREVET EUROPÉEN

(45) Date de publication du fascicule du brevet:
04.01.89

(21) Numéro de dépôt: **85114664.7**

(22) Date de dépôt: **19.11.85**

(51) Int. Cl.⁴: **B 01 D 19/00**, F 28 B 9/10

(54) **Dispositif de dégazage d'un fluide liquide.**

(30) Priorité: **20.11.84 FR 8417656**

(43) Date de publication de la demande:
**18.06.86 Bulletin 86/25**

(45) Mention de la délivrance du brevet:
**04.01.89 Bulletin 89/1**

(84) Etats contractants désignés:
**BE CH DE FR GB IT LI NL SE**

(56) Documents cité:
**EP-A-0 116 946**
**FR-A-1 453 078**
**FR-A-2 176 157**
**FR-A-2 313 131**
**GB-A-527 204**

(73) Titulaire: **DELAS, 12- 14, rue d'Alsace, F-92300 Levallois- Perret (FR)**

(72) Inventeur: **Andrieux, Bernard, 7 avenue Pierre Grenier, F-92100 Boulogne Billancourt (FR)**
Inventeur: **Bourven, Elisabeth, 13, rue Vauthier, F-92100 Boulogne Billancourt (FR)**
Inventeur: **Martin, Roger, 58 Boulevard Pasteur, F-94260 Fresnes (FR)**

(74) Mandataire: **Weinmiller, Jürgen, Lennéstrasse 9 Postfach 24, D-8133 Feldafing (DE)**

EP 0 184 689 B1

## Description

La présente invention concerne un dispositif de dégazage d'un fluide liquide, installé dans une enveloppe contenant à sa partie inférieure une réserve dudit fluide dégazé, à l'état liquide, en équilibre avec sa vapeur saturante, comprenant des plateaux crépinés situés au-dessus du niveau de ladite réserve et alimentés en fluide à dégazer, lesdits plateaux assurant une dispersion du liquide et alimentant un bac dans lequel est installé au moins une tuyauterie longeant horizontalement le bac au voisinage de l'une de ses parois et étant alimentée en vapeur dudit fluide à une pression supérieure à celle régnant dans ladite enveloppe, ladite tuyauterie comportant, sur toute sa longueur interne au bac, du côté de ladite paroi, une zone perforée permettant à la partie inférieure de la section de la tuyauterie de se remplir en fluide du bac et permettant à la vapeur de s'échapper de ladite tuyauterie.

Un tel dispositif est connu par le document E-A-116 946. Dans ce document, l'enveloppe dans laquelle est installé le dispositif est constitué par le puits d'un condenseur de centrale électrique. Le système décrit comporte deux tuyauteries telles que définies ci-dessus longeant l'une, une paroi du bac et l'autre, une paroi opposée. En outre, à un niveau inférieur à ces tuyauteries est située une troisième tuyauterie alimentée en vapeur à moyenne pression qui s'échappe par une rangée de trous. La partie supérieure du bac sert de déversoir par lequel l'eau tombe dans le puits du condenseur.

Cependant, cette disposition ne donne pas entièrement satisfaction en ce qui concerne le taux de dégazage.

La présente invention a pour but d'assurer un meilleur dégazage et a pour objet un dispositif tel que défini ci-dessus qui est caractérisé en ce que ledit bac est fermé à sa partie supérieure entre ladite paroi et ladite tuyauterie et en ce que ladite paroi, à un niveau supérieur à ladite zone perforée de la tuyauterie, est muni sur toute sa longueur, face à la tuyauterie, d'au moins une ouverture en forme de bec située dans une position telle qu'elle assure une mise en vitesse et une emulsion du mélange eau-vapeur.

Selon une réalisation préférée de l'invention, deux dites tuyauteries sont installées dans ledit bac, l'une longeant l'une des parois du bac et l'autre longeant la paroi opposée, le bac étant alimenté en fluide par lesdits plateaux crépinés, dans sa partie située entre les deux dites tuyauteries.

Avantageusement, le bec de pulvérisation est un bec continu.

Selon une première réalisation le bec est formé par une ouverture longitudinale dans ladite paroi du bac, munie d'au moins une lèvre souple en matériau élastique.

Selon une deuxième réalisation, ledit bec est formé par une ouverture longitudinale dans ladite paroi du bac, des moyens permettant d'ajuster la hauteur de ladite ouverture.

Le dispositif de dégazage tel que défini ci-dessus est situé dans un puits de condenseur de centrale électrique, ladite enveloppe étant l'enveloppe du condenseur lui-même et lesdits plateaux recevant l'eau condensée tombant des faisceaux tubulaires du condenseur.

Alternativement, le dispositif de dégazage est situé hors du condenseur dans une enveloppe individuelle portant à sa partie supérieure des tuyères de pulvérisation du fluide à dégazer alimentant lesdits plateaux, ladite enveloppe comportant à sa partie inférieure un orifice de sortie pour le fluide liquide dégazé et à sa partie supérieure des orifices communiquant avec une source de pression inférieure à la pression régnant dans l'enveloppe, par lesquels s'échappent les gaz incondensables.

On va maintenant décrire un exemple particulier de l'invention appliqué à un dégazeur d'eau alimentaire de centrale électrique dans le cas où le dispositif est situé, non pas dans un puits de condenseur, mais dans une enveloppe à part, hors du condenseur.

La figure 1 montre en coupe un dégazeur selon l'invention.

La figure 2 montre en vue de dessus une partie du dispositif représenté figure 1.

La figure 3 montre un détail de la figure 1.

La figure 4 montre une variante du détail représenté figure 3.

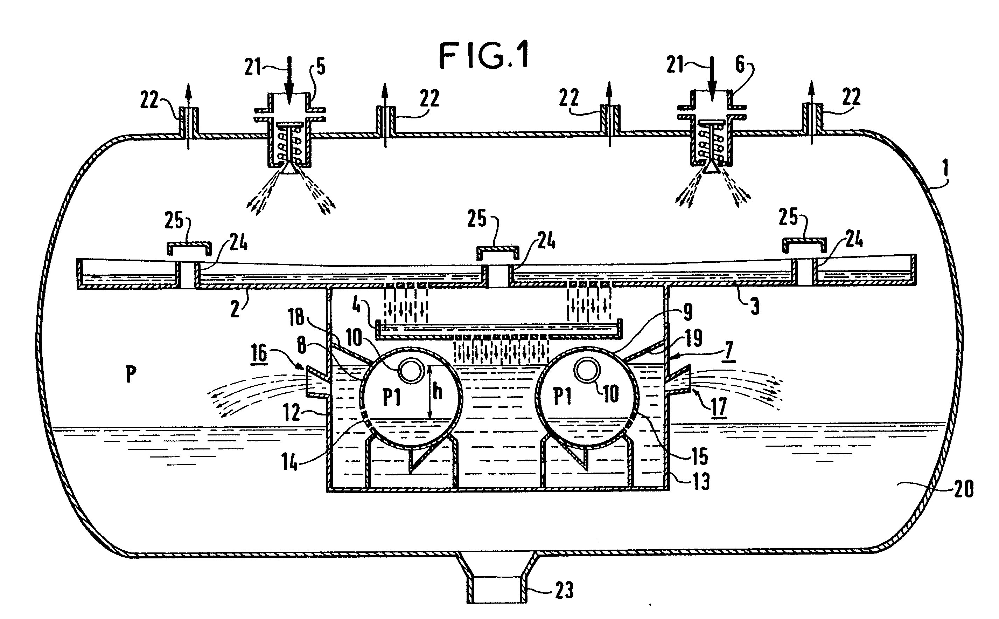

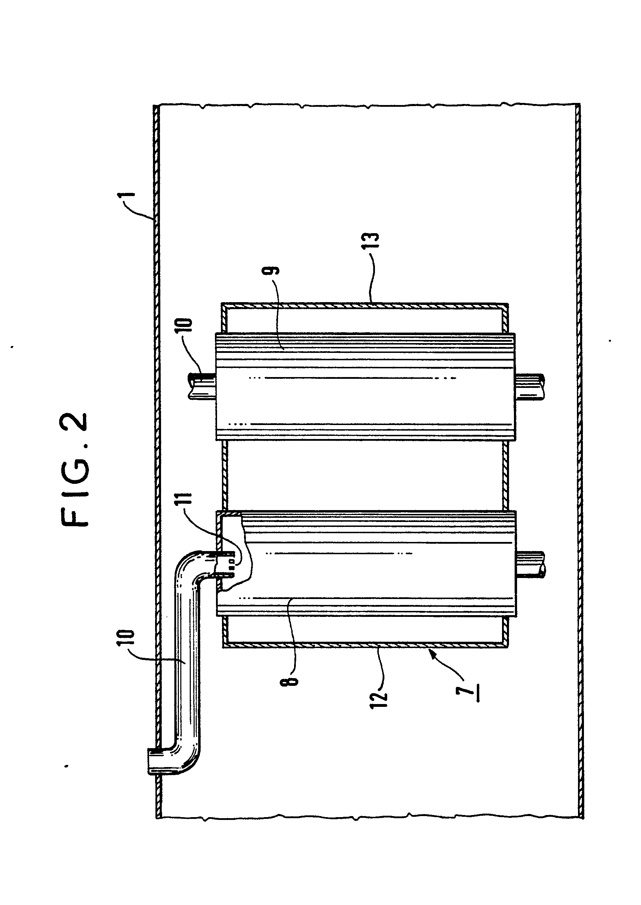

En se référant aux figures 1 et 2, le dégazeur représenté comprend une enveloppe externe 1. A l'intérieur de cette enveloppe sont situés des plateaux crépinés 2, 3 et 4 qui reçoivent l'eau à dégazer provenant de tuyères de pulvérisation 5 et 6. Les plateaux crépinés assurent une dispersion de l'eau et alimentent un bac 7.

A l'intérieur du bac 7, sont situées deux conduites horizontales 8 et 9 alimentées en vapeur d'eau de même composition que l'eau à dégazer, à partir de conduites 10 et à travers un diaphragme de détente tel que 11. Les tuyauteries 8 et 9, disposées parallèlement, sont voisines respectivement de deux parois opposées 12 et 13 du bac 7.

Du côté de leur paroi respective, 12 ou 13, les tuyauteries 8 et 9 comportent sur toute leur longueur une zone perforée 14 pour la tuyauterie 8 et 15 pour la tuyauterie 9. Les parois 12 et 13 comportent chacune, sur toute leur longueur, un bec continu de pulvérisation, respectivement 16 et 17, disposé à un niveau légèrement supérieur à celui des zones perforées 14 et 15. Le bac 7 est fermé à sa partie supérieure entre la paroi 12 et la tuyauterie 8 par une paroi 18 et entre la paroi 13 et la tuyauterie 9 par une paroi 19. Le bac 7 est alimenté en eau tombant du plateau crépiné 4, dans sa partie médiane, entre les tuyauteries 8 et 9.

La partie inférieure de l'enveloppe 1 contient de l'eau 20 dégazée. Cette partie est alimentée par les becs 16 et 17 et constitue une réserve au-dessus de laquelle règne une pression P due à la pression de vapeur saturante de l'eau 20 dégazée et à la pression partielle des gaz incondensables (de l'oxygène par exemple) extraits de l'eau d'alimentation arrivant en 21, par le dispositif. Des orifices 22, reliés à une source de pression inférieure à la pression P, permettent l'extraction de ces gaz incondensables.

L'extrémité inférieure de l'enveloppe 1 comprend un orifice de sortie 23 relié au circuit d'alimentation de la chaudière de la centrale.

La pression P1 de la vapeur d'eau envoyée dans les tuyauteries 8 et 9 est supérieure à la pression P régnant dans l'enveloppe 1. Cette différence de pression correspond à la hauteur d'eau h séparant le niveau de l'eau dans le bac 7 de celui de l'eau dans les tuyauteries 8 et 9 qui se remplissent en effet partiellement d'eau grâce aux perforations 14 et 15.

Le fonctionnement est le suivant:

L'eau à dégazer arrivant par les tuyères 5 et 6 est pulvérisée au-dessus des plateaux 2 et 3 et subit ainsi un premier réchauffage qui se poursuit jusqu'à la chute de l'eau dans le bac 7 au travers des plateaux crépinés 2, 3 et 4 qui assurent une dispersion de l'eau, favorable à son réchauffage jusqu'à une température voisine de la température de saturation de l'eau 20.

L'eau, ainsi réchauffée est mélangée avec la vapeur sortant par les perforations 14 et 15 des tuyauteries 8 et 9, l'ensemble passant à grande vitesse par les becs de pulvérisation 16, 17 assurant ainsi une émulsion parfaite du liquide et de la vapeur.

Cette émulsion permet de chasser les gaz non condensables contenus dans le liquide. Ceux-ci s'échappent par les orifices 22.

Pour permettre aux gaz incondensables de s'échapper facilement, les plateaux sont munis de cheminées 24 surmontées de chapeaux 25 afin d'éviter le passage direct de l'eau d'alimentation 21 par ces cheminées.

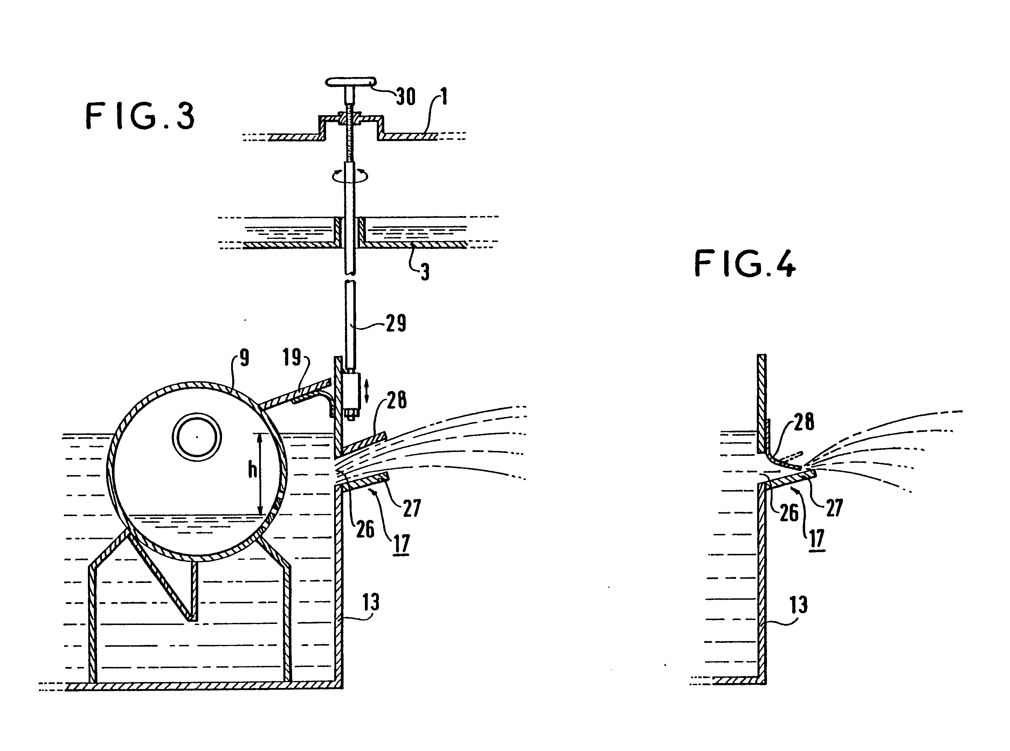

Pour obtenir la vitesse de sortie désirée au travers des becs 16, 17, on peut ajuster ce bec en fonction du débit de liquide. La figure 3 montre un tel dispositif d'ajustement. Le bec 17 est formé par une ouverture longitudinale 26 munie de lèvres 27 et 28. La partie supérieure de la paroi 13 du bac 7 est reliée à une tige 29 filetée à sa partie supérieure et se terminant par un volant de manoeuvre 30 permettant d'ajuster la hauteur de l'ouverture 26.

On peut aussi comme le représente la variante de la figure 4 constituer un bec qui s'ajuste automatiquement. La lèvre supérieure 28 est constituée d'une ou de plusieurs lames souples en matériau élastique, acier inoxydable, ou par des bandes de caoutchouc.

Le dispositif tel que décrit c'est-à-dire l'ensemble des plateaux 2, 3, 4, le bac 7, les tuyauteries 8 et 9 peut aussi fort bien et quelquefois même avantageusement être installé dans un puits de condenseur de centrale électrique.

L'enveloppe externe 1 est alors constituée par l'enveloppe du condenseur lui-même et les plateaux crépinés 2, 3 reçoivent directement l'eau condensée tombant des faisceaux tubulaires du condenseur, exactement de la même manière que dans le document cité ci-dessus FR-A-2 541 441.

Par rapport à ce document, la présente invention améliore considérablement le dégazage grâce aux becs de pulvérisation 16 et 17 et à la fermeture du bac 7 par les parois 18 et 19 entre chaque tuyauterie et la paroi voisine du bac.

On va maintenant donner à titre d'exemple non limitatif des valeurs numériques en référence à la fig. 1 (hors échelle): A l'entrée, en 21, l'eau à dégazer est à 27,9°C et son débit est de 2050 tonnes à l'heure (en tout pour les deux tuyères 5 et 6). A la sortie 23, l'eau dégazée est à 31°C. Dans les tuyauteries 8 et 9, la vapeur est à une pression P1 de 60 millibars et à 150°C. Ces tuyauteries sont alimentées par les conduites 10, par de la vapeur à 12 bars à 188°C, de soutirage par exemple, avec un débit de 15 tonnes à l'heure, en tout pour les deux conduites 10. Cette vapeur se détend donc de 12 bars à 60 millibars au travers du diaphragme 11. Enfin, dans l'enveloppe 1, c'est-à-dire dans le dégazeur ou dans le puits du condenseur si le dispositif y est installé, la pression P est de 40 millibars. On a donc une différence de 20 millibars entre la pression P et la pression P1 correspondant à une hauteur h égale à 20 cm.

Ces valeurs sont données pour le fonctionnement en puissance nominale d'une centrale de 900 M W qui comporterait deux dispositifs complets tels que représentés figure 1 (hors échelle).

De même que cet exemple numérique est donné à titre purement particulier et non limitatif, le dispositif selon l'invention s'applique également à d'autres fluides que l'eau et pour d'autres applications que les centrales électriques.

**Revendications**

1. Dispositif de dégazage d'un fluide liquide, installe dans une enveloppe (1) contenant à sa partie inférieure une réserve (20) dudit fluide dégazé à l'état liquide, en équilibre avec sa vapeur saturante, comprenant des plateaux crépinés (2, 3, 4) situés au-dessus du niveau de ladite réserve et alimentés en fluide liquide à dégazer, lesdits plateaux assurant une dispersion du liquide et alimentant un bac (7) dans lequel est installée au moins une tuyauterie (8, 9) longeant horizontalement le bac au voisinage de l'une de ses parois (12, 13) et étant alimentée en vapeur dudit fluide à une pression (P1) supérieure à celle (P) régnant dans ladite enveloppe, ladite tuyauterie comportant, sur toute sa interne au bac, du côté de ladite paroi, une zone perforée (14, 15) permettant à la partie inférieure de la section de la tuyauterie de se remplir en fluide du bac et permettant à la vapeur de s'échapper de ladite tuyauterie, caractérisé en ce qu ledit bac est ferme (18, 19) à sa partie supérieure entre ladite paroi (12, 13) et ladite tuyauterie (8, 9) et en ce que ladite paroi, à un niveau supérieur à ladite zone perforée de la tuyauterie, est munie sur toute sa longueur, face à la tuyauterie, d'au moins une ouverture en forme de bec (16) située dans une position telle qu'elle assure une mise en vitesse et une émulsion du mélange eau-vapeur.

2. Dispositif de dégazage selon la revendication 1, caractérisé en ce que deux dites tuyauteries (8, 9) sont installées dans ledit bac, l'une (8) longeant l'une (12) des parois du bac et l'autre (9) longeant la paroi opposée (13), le bac étant alimenté en fluide par lesdits plateaux crépinés, dans sa partie située entre les deux dites tuyauteries.

3. Dispositif de dégazage selon l'une des revendications 1 ou 2, caractérisé en ce que ledit bec (16) est un bec continu.

4. Dispositif de dégazage selon la revendication 3, caractérisé en ce que ledit bec est formé par une ouverture longitudinale (26) dans ladite paroi du bac, munie d'au moins une lèvre souple (28) en matériau élastique.

5. Dispositif de dégazage selon la revendication 3, caractérisé en ce que ledit bec est formé par une ouverture longitudinale (26) dans ladite paroi du bac, des moyens (29, 30) permettant d'ajuster la hauteur de ladite ouverture.

6. Dispositif de dégazage selon l'une des revendications précédentes, caractérisé en ce qu'il est situé dans un puits de condenseur de centrale électrique, ladite enveloppe étant l'enveloppe du condenseur lui-même et lesdits plateaux recevant l'eau condensée du condenseur.

7. Dispositif de dégazage selon l'une des revendications 1 à 5, caractérisé en ce que ladite enveloppe comporte à sa partie supérieure des tuyères (5, 6) de pulvérisation du fluide à dégazer alimentant lesdits plateaux, ladite enveloppe comportant à sa partie inférieure un orifice de sortie (23) pour le fluide liquide dégazé et à sa partie supérieure, des orifices (22) communiquant avec une source de pression inférieure à la pression P régnant dans l'enveloppe, par lesquels s'échappent les gaz incondensables.

**Patentansprüche**

1. Vorrichtung zur Entgasung einer Flüssigkeit, die in einer Hülle (1) angeordnet ist, welche in ihrem unteren Teil einen Tank (20) mit entgaster Flüssigkeit aufweist, im Gleichgewicht mit ihrem sättigendenden Dampf, mit Lochplatten (2, 3, 4) die oberhalb des Pegels im Tank angeordnet und mit zu entgasender Flüssigkeit gespeist werden, wobei die Platten eine Dispersion der Flüssigkeit bewirken und einen Behälter (7) speisen, in dem sich mindestens eine Rohrleitung (8, 9) befindet, die waagerecht entlang des Behälters in der Nähe einer seiner Wände (12, 13) verläuft und mit Dampf der genannten Flüssigkeit unter einem Druck (P1) versorgt wird, der höher ist als der Druck (P) der in der Hülle herrscht, wobei die Rohrleitung über ihre gesamte Länge innerhalb des Behälters auf der Seite der betreffenden Wand einen perforierten Bereich (14, 15) aufweist, der es dem unteren Bereich des Rohrleitungsquerschnitts erlaubt, sich mit Füssigkeit aus dem Behälter zu füllen, und es dem Dampf ermöglicht, aus dem Rohrleitung zu entweichen, dadurch gekennzeichnet, daß der Behälter in seinem oberen Bereich zwischen der Wand (12, 13) und der Rohrleitung (8, 9) geschlossen ist (18, 19) und daß die Wand oberhalb des perforierten Bereichs (14, 15) der Rohrleitung über ihre ganze Länge gegenüber der Rohrleitung mit mindestens einer Öffnung in Form einer Düse (16) versehen ist, die sich in einer solchen Stellung befindet, daß sie eine Beschleunigung und eine Emulsion der Mischung aus Wasser und Dampf bewirkt.

2. Entgasungsvorrichtung nach Anspruch 1, dadurch gekennzeichnet, daß die beiden Rohrleitungen (8, 9) in dem Behälter angeordnet sind, wobei die eine (8) entlang einer der Wände (12) des Behälters und die andere (9) entlang der entgegengesetzten Wand (13) verläuft, wobei der Behälter in seinem Bereich, der sich zwischen den beiden Rohrleitungen befindet, durch die Lochplatten hindurch mit Flüssigkeit gespeist wird.

3. Entgasungsvorrichtung nach einem der Ansprüche 1 oder 2, dadurch gekennzeichnet, daß die Düse (16) eine durchlaufende Düse ist.

4. Entgasungsvorrichtung nach Anspruch 3, dadurch gekennzeichnet, daß die Düse aus einer Längsöffnung (26) in der Wand des Behälters gebildet wird, die mindestens eine geschmeidige Lippe (28) aus biegsamem Material aufweist.

5. Entgasungsvorrichtung nach Anspruch 3, dadurch gekennzeichnet, daß die Düse aus einer Längsöffnung (25) in der Wand des Behälters gebildet wird, wobei Mittel (29, 30) die Höhe der Öffnung zu justieren erlauben.

6. Entgasungsvorrichtung nach einem der vorhergehenden Ansprüche, dadurch gekennechnet, daß sie sich in einer Kondensatorwanne eines Kraftwerks befindet, wobei die Hülle die Hülle des Kondensators selbst ist und die Platten das kondensierte Wasser des Kondensators empfangen.

7. Entgasungsvorrichtung nach einem der Ansprüche 1 bis 5, dadurch gekennzeichnet, daß die Hülle in ihrem oberen Bereich Düsen (5, 6) zur Pulverisierung der zu entgasenden Flüssigkeit aufweisen, die die Platten speisen, wobei die Hülle in ihrem unteren Bereich eine Auslaßöffnung (23) für die entgaste Flüssigkeit und in ihrem oberen Bereich Öffnungen (22) aufweist, die mit einer Quelle eines Drucks in Verbindung stehen, der niedriger ist als der in der Hülle herrschende Druck P, wobei durch diese Öffnungen die nicht kondensierbaren Gase entweichen.

## Claims

1. A device for degassing a liquid fluid, installed in an envelope (1) containing at its lower portion a supply (20) of said degassed fluid in the liquid state, in equilibrium with its saturating vapour, comprising perforated trays (2, 3, 4) situated above the level of said supply and fed with fluid to be degassed, said trays dispersing the liquid and feeding a tank (7) which includes at least one pipe (6, 9) extending horizontally along the tank in the vicinity of one of its walls (12, 13) and being supplied with vapour of said fluid at a pressure (P1) exceeding the pressure (P) within said envelope, said pipe including, along its entire length inside the tank on the side adjacent to said wall, a perforated zone (14, 15) serving to fill the lower portion of the pipe cross-section with liquid from the tank and allowing the vapour to escape from said pipe, characterized in that said tank is closed (18, 19) at its upper portion between said wall (12, 13) and said pipe (8, 9), and in that said wall is provided over its entire length facing the pipe and at a level higher than said perforated zone of the pipe with at least one opening in the form of a nozzle (16) situated in such a position that it ensures an acceleration and an emulsion of the water-vapour mixture.

2. A degassing device according to claim 1, characterized in that two of said pipes (8, 9) are installed in said tank, one (6) running along one of the walls (12) of the tank and the other (9) running along the opposite wall (13), the tank being fed with fluid from said perforated trays in its portion situated between said two pipes.

3. A degassing device according to claim 1 or 2, characterized in that the spray nozzle (16) is a continuous nozzle.

4. A degassing device according to claim 3, characterized in that the nozzle is constituted by a longitudinal opening (26) through said wall of the tank, provided with at least one flexible lip (28) of resilient material.

5. A degassing device according to claim 3, characterized in that said nozzle is constituted by a longitudinal opening (26) through said wall of the tank, whereby means (29, 30) are provided for adjusting the height of said longitudinal opening.

6. A degassing device according to one of the preceding claims, characterized in that it is situated in a well of a condenser in an electricity power station, said envelope being the envelope of the condenser itself and said trays receiving the condensed water from the condenser.

7. A degassing device according to one of claims 1 to 5, characterized in that said envelope includes at its upper portion nozzles (5, 6) for spraying fluid to be degassed to feed said trays, said envelope including at its lower portion an outlet orifice (23) for the degassed liquid fluid, and at its upper portion orifices (22) communicating with a source of pressure which is lower than the pressure P inside the envelope, orifices through which escape the uncondensable gases.

# FIG.1

EP 0 184 689 B1

# FIG. 2

EP 0 184 689 B1

FIG.3

FIG.4